(19) Europäisches Patentamt
European Patent Office
Office européen des brevets

(11) **EP 3 538 678 B1**

(12) **EUROPÄISCHE PATENTSCHRIFT**

(45) Veröffentlichungstag und Bekanntmachung des Hinweises auf die Patenterteilung:
**05.01.2022   Patentblatt 2022/01**

(21) Anmeldenummer: **17811833.7**

(22) Anmeldetag: **07.11.2017**

(51) Int Cl.:
*C21D 9/36* $^{(2006.01)}$      *C21D 9/38* $^{(2006.01)}$
*C22C 38/00* $^{(2006.01)}$    *F16C 33/62* $^{(2006.01)}$
*F16C 33/64* $^{(2006.01)}$    *C21D 1/10* $^{(2006.01)}$
*C21D 9/40* $^{(2006.01)}$      *C22C 38/02* $^{(2006.01)}$
*C22C 38/04* $^{(2006.01)}$    *C22C 38/06* $^{(2006.01)}$
*C22C 38/08* $^{(2006.01)}$    *C22C 38/12* $^{(2006.01)}$
*C22C 38/16* $^{(2006.01)}$    *C22C 38/18* $^{(2006.01)}$
*C22C 38/20* $^{(2006.01)}$    *C22C 38/22* $^{(2006.01)}$
*C22C 38/40* $^{(2006.01)}$    *C22C 38/42* $^{(2006.01)}$
*C22C 38/44* $^{(2006.01)}$

(86) Internationale Anmeldenummer:
**PCT/DE2017/100943**

(87) Internationale Veröffentlichungsnummer:
**WO 2018/086658 (17.05.2018 Gazette 2018/20)**

(54) **VERFAHREN ZUR HERSTELLUNG EINES WÄLZLAGERRINGS MIT VERBESSERTER ROBUSTHEIT GEGEN DIE BILDUNG VON WHITE ETCHING CRACKS (WEC)**

METHOD FOR PRODUCING A ROLLING BEARING RING HAVING AN IMPROVED ROBUSTNESS AGAINST THE FORMATION OF WHITE ETCHING CRACKS (WEC)

PROCÉDÉ DE FABRICATION D'UNE BAGUE DE PALIER DE ROULEMENT PRÉSENTANT UNE ROBUSTESSE ACCRUE CONTRE LA FORMATION DE FISSURES DE PHASE BLANCHE (WEC)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2016   DE 102016221993**

(43) Veröffentlichungstag der Anmeldung:
**18.09.2019   Patentblatt 2019/38**

(73) Patentinhaber: **Schaeffler Technologies AG & Co. KG**
**91074 Herzogenaurach (DE)**

(72) Erfinder:
• **HOFMANN, Lothar**
**92318 Neumarkt (DE)**
• **MANGOLD, Andreas**
**97638 Mellrichstadt (DE)**
• **BLASS, Toni**
**97493 Bergrheinfeld (DE)**
• **KRUHÖFFER, Wolfram**
**91086 Aurachtal (DE)**
• **TROJAHN, Werner**
**97464 Niederwerrn (DE)**

(56) Entgegenhaltungen:
WO-A1-2015/199599      DE-A1-102005 060 113
JP-A- 2009 203 526       US-A1- 2010 296 764

• **SAARSTAHL: "Werkstoff-Datenblatt Saarstahl - 42CrMo4 - 42CrMoS4", INTERNET CITATION, 1 June 2010 (2010-06-01), page 1, XP002677711, Retrieved from the Internet: URL:http://www.saarstahl.com/fileadmin/saa rstahl_extranet/images/04_produkte/walzsta hlsorten/deutsch/7225_7227_42CrMo4_42CrMo S 4.pdf [retrieved on 2012-06-14]**
• **SPIEKERMANN P: "Alloys - a special problem of patent law", NONPUBLISHED ENGLISH TRANSLATION OF DOCUMENT, 31 December 2000 (2000-12-31), pages 1-20, XP002184689,**

**Beschreibung**

Die Erfindung betrifft ein Verfahren zur Herstellung eines Wälzlagerrings mit verbesserter Robustheit gegen die Bildung von White Etching Cracks (WEC).

Wälzlager kommen in unterschiedlichsten Anwendungen zum Einsatz, beispielsweise im Automobilbereich oder bei Industrieanlagen oder -maschinen und Ähnlichem. Die Beanspruchung eines solchen Wälzlagers umfasst neben der klassischen Beanspruchung, also der Überrollung der Lagerringe durch die Wälzkörper und der damit verbundenen Herz'schen Pressung respektive dem Herz'schen Kontakt, oft auch eine Zusatzbeanspruchung, die beispielsweise eine starke Mischreibung oder eine elektrische oder dynamische Elektrizität oder Ähnliches sein kann. Insbesondere wenn eine solche Zusatzbeanspruchung vorliegt, haben sich im Anwendungsfall mitunter Schäden an solchen Wälzlagern respektive den Wälzlagerbauteilen in Form sogenannter White Etching Cracks (WEC) gezeigt. Diese White Etching Cracks treten zunächst als Gefügeveränderungen im Werkstoff der betroffenen Wälzlagerkomponente auf. Die Gefügeveränderung findet unterhalb der Lageroberfläche, also der belasteten Fläche statt. Im weiteren Verlauf können sich Mikrorisse unter dem Einfluss der äußeren Belastung bilden und bis zur Oberfläche hin ausbreiten. Die Mikrorisse ergeben dann das für WECs typische Schadensbild in Form von Axialrissen oder Abblätterungen, bevorzugt im Bereich der Laufbahn des belasteten Bauteils, beispielsweise eines Innen- oder Außenrings eines Wälzlagers. Im Extremfall kann es bei fortschreitendem Schadensverlauf bis zu einem Reißen oder Brechen des Wälzlagerrings und damit einem vorzeitigen Lagerausfall kommen.

Der Schadensmechanismus, der zur Bildung solcher WECs führt, ist noch nicht abschließend geklärt. Es wird jedoch davon ausgegangen, dass die Zusatzbeanspruchung zu einer Freisetzung von Wasserstoff aus dem Schmierstoffsystem, über welches das Wälzlager geschmiert wird, führt. Dieser Wasserstoff führt vermutlich im Gefüge des Wälzlagermaterials, also des Stahls, zur Umwandlung von martensitischen und/oder bainitischen Strukturen zu amorphem bzw. nanokristallinem Ferrit mit zwangsgelöstem Kohlenstoff bzw. aufgelösten Carbidstrukturen.

Aus EP 2 123 779 A1 ist bekannt, ein mechanisch belastetes Lagerbauteil aus einem durchgehärteten Stahl mit einem Kohlenstoffgehalt zwischen 0,4 - 0,8 Gew.-% herzustellen. Das Durchhärten ist aber abhängig von z.B. dem Gehalt an härtbarkeitssteigernden Legierungselementen auf einen bestimmten Querschnitt beschränkt. Außerdem ist diese Technologie nicht einsetzbar, wenn das Bauteil nach dem Härten eine hohe Zähigkeit im Kern aufweisen soll.

Aus EP 2 573 195 A1 ist ein Verfahren zur Herstellung eines Wälzlagerbauteils bekannt, bei dem das Wälzlagerbauteil auf eine Temperatur zwischen 100 - 200 °C für eine Zeit von 5 - 120 Min. erwärmt wird, während welcher Zeit es im Bereich der Laufbahn in Kontakt mit einem chemischen Additiv kommt, um eine lokal oberflächlich veränderte Laufbahnrandschicht auszubilden. Als ein solches chemisches Additiv kann ein Konservierungs- oder ein Getriebeöl mit einem Wassergehalt von bis zu 500 ppm verwendet werden. Eine solche Oberflächenmodifikation ist jedoch nur solange gegen die Bildung von WECs wirksam, solange sie nicht im Betrieb abgerieben ist. Damit ist der Einsatz solcher Bauteile insbesondere bei Anwendungen in verschmutzter Umgebung und/oder mit hohem Mischreibungsanteil nur eingeschränkt möglich.

Ähnlich verhält es sich bei Aufbringen von speziellen Beschichtungen oder dem Ausbilden einer Brünierschicht auf den Laufflächen, also den beanspruchten Bauteilbereichen. Diese können gegebenenfalls ihre Funktion verlieren, wenn sie abgerieben sind.

Die WO 2015/ 199 599 A1 beschreibt ein Verfahren zur Oberflächenhärtung einer Metallkomponente mit den Schritten Induktionshärten und anschließendem Anlassen.

Die JP 2009 203 526 A offenbart ein Wälzlager mit einem Lagerring oder einem Wälzkörper aus Stahl umfassend 0,2 bis 0,7 % Kohlenstoff (C), 0,5 bis 3,0 % Chrom (Cr), 0,4 bis 2,0 % Silizium (Si), 0,5 bis 3,0 % Molybdän (Mo), 10 ppm oder weniger Sauerstoff (O) und Rest Eisen sowie unvermeidbare Verunreinigungen. Der Stahl wird induktionsgehärtet, abgekühlt und angelassen.

Der Erfindung liegt damit das Problem zugrunde, ein Verfahren anzugeben, das die Herstellung eines Wälzlagerrings mit einer verbesserten Robustheit gegen die Bildung von White Etching Cracks ermöglicht.

Zur Lösung dieses Problems ist erfindungsgemäß ein Verfahren vorgesehen, das sich dadurch auszeichnet, dass der Wälzlagerring aus einem untereutektoiden Vergütungsstahl

zur Ausbildung einer gehärteten Randschicht induktiv erwärmt, anschließend abgeschreckt und anschließend angelassen wird.

Das erfindungsgemäße Verfahren sieht gemäß Anspruch 1 einerseits die Verwendung eines besonderen Ausgangsmaterials, nämlich eines untereutektoiden Vergütungsstahls vor, zum anderen die Durchführung definierter Härte- und Temperaturbehandlungsschritte, die zur Ausbildung einer gehärteten Randschicht führen.

Ein solcher untereutektoider Vergütungsstahl wird sodann in einem induktiven Härteverfahren ausschließlich randseitig gehärtet, so dass sich eine induktiv gehärtete Randschicht ausbildet. Im gehärteten Zustand enthält dieser untereutektoide Vergütungsstahl im gehärteten Randschichtbereich keine ungelösten Carbide. Nach dem Induktiverwärmen erfolgt ein Abschrecken des Wälzlagerbauteils (Härten), woran sich ein Anlassschritt anschließt. Durch das Anlassen werden kleinste Anlasscarbide ($Fe_2C$) gebildet, deren Größe deutlich unter 1 $\mu$m ist.

Durch die induktive Randschichthärtung sind in der Randschicht sehr hohe Druckeigenspannungen gegeben, die eine gewisse Sperrwirkung für Wasserstoff darstellen, der als Ursache für die Bildung der WECs angesehen wird. Das heißt, dass trotz der gegebenen Zusatzbeanspruchung und der hieraus möglicherweise resultierenden Bildung von Wasserstoff dieser nicht in das Gefüge diffundieren kann, weshalb sich der derart hergestellte Wälzlagerring als äußerst robust gegen die Bildung von WECs erwiesen hat. Ein weiterer Vorteil der durch die Induktivhärtung gegebenen hohen Druckeigenspannungen ist, dass sie bei einer Überrollung entstehende Zugdehnungsfelder überkompensieren, so dass auch hierüber die Anlagerung von Wasserstoff in diesen Bereichen gehemmt ist. Durch die hohen Druckeigenspannungen wird letztlich die absolute Wasserstoffkonzentration und damit der schädliche Einfluss im überrollten Volumen signifikant verringert.

Das Erwärmen kann gleichmäßig über der zu härtenden Fläche erfolgen oder im Vorschubverfahren. Für das Vorschubverfahren wird die zur Erwärmung erforderliche elektrische Leistung so gesteuert, dass es beim Erreichen eines bereits gehärteten Bereichs nicht zu dessen Wiedererwärmung kommt, die Abschreckung erfolgt ebenfalls im Vorschub mittels einer Brause.

Das Gefüge unterhalb der gehärteten Randschicht des erfindungsgemäßen Wälzlagerrings besteht im Gegensatz zu klassischen, durchgehärteten Wälzlagerstählen wie beispielsweise aus der 100Cr6-Familie nicht aus Plattenmartensit, sondern aus Lanzettmartensit. Dieses Gefüge stellt die Einhaltung respektive das Erreichen der gewünschten mechanischen Eigenschaften des Wälzlagerbauteils sicher, verbunden mit einer gehärteten und robusten Randschicht.

Die Herstellung ist deutlich vereinfacht, da lediglich eine induktive Randschichthärtung erfolgt, die wesentlich schneller vonstattengehen kann als eine vollständige Durchhärtung. Auch ist das Aufbringen spezieller Beschichtungen oder die Erzeugung einer oberflächenmodifizierten Lauffläche und Ähnliches, wie im Stand der Technik vorgesehen, nicht erforderlich, weshalb das Wälzlagerbauteil sehr einfach und schnell herstellbar ist.

Erfindungsgemäß weist der verwendete Vergütungsstahl einen Gehalt an Ni von 0,75% auf. Der untereutektoide Vergütungsstahl zeigt also einen definierten, relativ hohen Ni-Gehalt. Dieser Ni-Gehalt führt zu einer Steigerung der Zähigkeit und damit zu einer weiteren Verbesserung der erreichbaren mechanischen Eigenschaften. Durch Erhöhung des Ni-Gehalts kann gleichzeitig der C-Gehalt etwas verringert werden, was zusätzlich dahingehend von Vorteil ist, dass, wie ausgeführt, im gehärteten Zustand keine ungelösten Carbide vorliegen.

Im Vergleich zu dem bekannten Vergütungsstahl 50CrMo4, dessen C-Gehalt zwischen 0,46 - 0,54 % liegt, liegt aufgrund des Ni-Gehalts der C-Gehalt etwas niedriger. Das heißt, dass ein Vergütungsstahl folgender Zusammensetzung verwendet wird (Angaben in %):

| | |
|---|---|
| C: | 0,4 - 0,46 |
| Si: | max. 0,4 |
| Mn: | 0,5 - 0,8 |
| P: | max. 0,035 |
| S: | max. 0,03 |
| Cr: | 0,9 - 1,2 |
| Mo: | 0,15 - 0,3 |
| Ni: | 0,5 - 1,0. |

Gemäß der Erfindung wird ein Vergütungsstahl mit folgender Zusammensetzung verwendet (Angaben in %):

| | |
|---|---|
| C: | 0,45 |
| Si: | 0,23 |
| Mn: | 0,64 |
| P: | 0,004 |
| S: | 0,001 |
| Cr: | 1,18 |
| Mo: | 0,28 |
| Ni: | 0,75 |
| Cu: | 0,12 |
| Al: | 0,02 |

sowie ein Rest aus Eisen und Spurenelementen.

Gemäß einer zweckmäßigen Weiterbildung des erfindungsgemäßen Verfahrens kann vorgesehen sein, dass das induktive Erwärmen derart erfolgt, dass sich eine gehärtete Randschicht von wenigstens 0,2 mm Dicke bis höchstens 8 mm Dicke ausbildet. Die Dicke der Randschicht hängt natürlich von der Bemaßung des Wälzlagerrings ab. Die induktive Randschichthärtung erfolgt dabei insbesondere bei größeren Querschnitten respektive größeren Bauteilen und damit größeren Randschichthärtetiefen vorzugsweise an vorvergüteten Stählen, aber auch eine Härtung aus dem Normalglühgefüge oder dem GKZ-Zustand ist möglich (GKZ = Glühen auf kugeligen Zementit).

Das induktive Erwärmen erfolgt erfindungsgemäß bei einer Frequenz von 8 - 11 kHz, insbesondere von 9 - 10 kHz für eine Dauer von 3 - 10 s, insbesondere 4 - 7 s. Besonders bevorzugt wird eine Härtung bei 9,9 kHz für 5 s.

Die induktive Härtung führt dazu, dass sich im gehärteten Randbereich hohe Druckeigenspannungen ausbilden. Das Härten sollte erfindungsgemäß derart erfolgen, dass im gehärteten Randbereich eine Druckeigenspannung von wenigstens 300 MPa, oder deutlich höher gegeben ist. Mit zunehmender Druckeigenspannung steigt die Sperrwirkung der Randschicht gegen eine Wasserstoffdiffusion.

Das Anlassen, das zur Bildung der Anlasscarbide führt, sollte bei einer Temperatur von 120 - 160 °C, insbesondere bei 130 - 150 °C für eine Dauer von 1 - 4 h, insbesondere 2 - 3 h erfolgen. Besonders bevorzugt erfolgt das Anlassen bei einer Temperatur von 140 °C für 2 h. Das dem Anlassen vorgeschaltete Abschrecken erfolgt in einer geeigneten Abschreckflüssigkeit.

Neben dem Verfahren selbst betrifft die Erfindung ferner einen Wälzlagerring, der gemäß dem erfindungsgemäßen Verfahren hergestellt ist. Es besteht aus dem untereutektoiden Vergütungsstahl mit einer durch induktives Härten ausgebildeten gehärteten Randschicht.

Es wurden jeweils sechs Axiallager bestehend aus jeweils zwei Axialscheiben hergestellt.

Ein erstes Konvolut aus sechs Axiallagern wurde aus einem handelsüblichen 100Cr6-Stahl mit folgender Herstellroute hergestellt:

Schmieden - Vergüten - Drehen - martensitisches Härten - Abschrecken - Anlassen - Schleifen - Honen.

Ein zweites Konvolut aus sechs Lagern wurde in der erfindungsgemäßen Weise aus einem untereutektoiden Vergütungsstahl folgender Zusammensetzung hergestellt:

| C:  | 0,45  |
|-----|-------|
| Si: | 0,23  |
| Mn: | 0,64  |
| P:  | 0,004 |
| S:  | 0,001 |
| Cr: | 1,18  |
| Mo: | 0,28  |
| Ni: | 0,75  |
| Cu: | 0,12  |
| Al: | 0,02  |

sowie ein Rest aus Eisen und Spurenelementen (Angaben in %).

Die Herstellungsroute dieses auf Basis von 50CrMo4 modifizierten untereutektoiden Vergütungsstahls war wie folgt:

Schmieden - GKZ-Glühen - Drehen - induktives Randschichthärten - Anlassen - Schleifen - Honen.

Das induktive Härten erfolgte über eine Frequenz von 9,9 kHz bei einer Heizzeit von 5 s. Das Abschrecken erfolgte in einem unter dem Handelsnamen "Aquatensid-BW" erhältlichen Abschreckbad auf Raumtemperatur. Das Anlassen erfolgte bei 140 °C für 2 h.

Die Lager bestanden aus jeweils zwei Axiallagerscheiben mit einem Außendurchmesser von 95 mm und einem Innendurchmesser von 60 mm. Die Wälzkörper waren keramische Zylinderrollen mit einer Länge von 11 mm und einem Durchmesser von 11 mm. Sie waren in einem Käfig geführt.

Die Lebensdaueruntersuchung wurde gemäß den Vorgaben nach DIN51819-1, jedoch bei einer Umdrehung von 750 U/min, einer Belastung von 60 kN (2075 MPa) und Anwesenheit eines speziellen, WEC-erzeugenden Öls durchgeführt. Es wurden jeweils zwei Wälzlager des gleichen Typs untersucht, also jeweils zwei Lager mit modifiziertem 50CrMo4 oder jeweils zwei Lager aus bisher verwendetem 100Cr6.

Die erhaltenen Ergebnisse sind in der nachfolgenden Tabelle dargestellt.

| Lager Nr. | 100Cr6 Laufzeit in h | 50CrMo4 mod. Laufzeit in h |
|-----------|----------------------|----------------------------|
| 1         | 39                   | 74                         |
| 2         | 39                   | 74                         |

(fortgesetzt)

| Lager Nr. | 100Cr6 Laufzeit in h | 50CrMo4 mod. Laufzeit in h |
|---|---|---|
| 3 | 45 | 106 |
| 4 | 45 | 106 |
| 5 | 45 | 114 |
| 6 | 45 | 114 |

Ermittelt wurden zu jedem Lager in den normierten Laufversuchen die Laufzeiten bis zum Ausfall, also die Zeit, bis das Lager betriebsbedingt nicht mehr einsatzfähig war, sei es, dass ein makroskopischer Schaden erfasst wurde, sei es, dass WECs erfasst wurden.

Ersichtlich konnte durch Verwendung des erfindungsgemäßen Ni-haltigen untereutektoiden Vergütungsstahls in Verbindung mit der erfindungsgemäßen Herstellroute respektive insbesondere dem induktiven Randschichthärten eine beachtliche Verbesserung der Laufzeit erreicht werden, verglichen mit den martensitischen Axiallagerscheiben aus 100Cr6. Es ergibt sich eine Laufzeitsteigerung von mehr als einem Faktor 2, wie sich aus einem Vergleich der gemittelten Laufzeiten ergibt. Bei den Lagern aus 100Cr6 ergibt sich eine über alle 6 Lager ermittelte durchschnittliche Laufzeit von 43h, während sich bei den Lagern mit modifiziertem 50CrMo4 eine durchschnittliche Laufzeit von 98 h ergibt, also von mehr als dem Doppelten.

Die angestellten Vergleichsuntersuchungen zeigen, dass das erfindungsgemäße Verfahren respektive das erfindungsgemäße Wälzlagerbauteil eine deutliche Verbesserung der Robustheit gegen die Bildung von WECs zeigt.

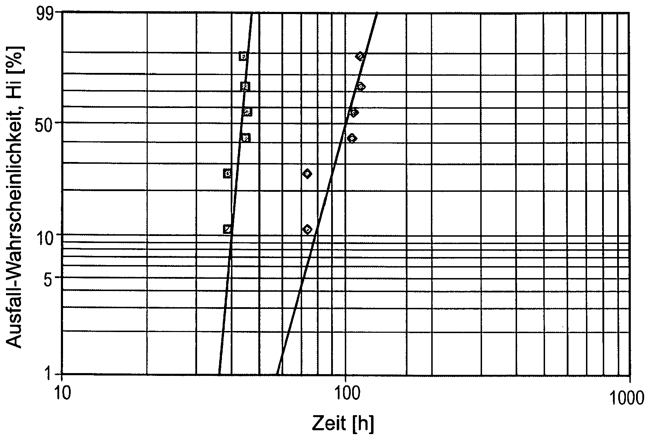

Dies zeigt auch die in der Zeichnung dargestellte Weibull-Darstellung der Messwerte. Aufgetragen ist längs der Abszisse die Lebensdauer, also die Betriebsdauer bis zum Ausfall und längs der Ordinate der sogenannte Unreliability-Wert, der die Ausfallwahrscheinlichkeit Hi in Prozent angibt, jeweils logarithmisch. Die Weibull-Verteilung stellt eine allgemeine Verteilung dar.

Die Summenhäufigkeit Hi ermittelt sich wie folgt:

$$Hi = (i - 0,3) : (n + 0,4)$$

mit:

i = Ordnungszahl des Ausfalls (hier: 1 ... 6)
n = Anzahl an Proben (hier: 6)

Die als Vierecke dargestellten Messwerte ( ▪ ) geben die Werte für die aus 100Cr6 gefertigten Wälzlager respektive Axialscheiben an. Die rautenförmigen Symbole (♦) geben die Messwerte für die erfindungsgemäßen Wälzlagerbauteile respektive Axialscheiben wieder. Dargestellt ist jeweils auch eine Fitgerade.

**Patentansprüche**

1. Verfahren zur Herstellung eines Wälzlagerrings mit verbesserter Robustheit gegen die Bildung von White Etching Cracks (WEC), wobei der Wälzlagerring aus einem untereutektoiden Vergütungsstahl mit folgender Zusammensetzung gebildet wird (Angaben in %):

| | |
|---|---|
| C: | 0,45 |
| Si: | 0,23 |
| Mn: | 0,64 |
| P: | 0,004 |
| S: | 0,001 |
| Cr: | 1,18 |
| Mo: | 0,28 |
| Ni: | 0,75 |
| Cu: | 0,12 |
| Al: | 0,02 |

sowie einem Rest aus Eisen und Spurenelementen,
und zur Ausbildung einer gehärteten Randschicht induktiv erwärmt, anschließend abgeschreckt und anschließend angelassen wird, wobei das Erwärmen bei einer Frequenz von 8 - 11 kHz, insbesondere von 9 - 10 kHz, für eine Dauer von 3 - 10 s, insbesondere 4 - 7 s, erfolgt.

**2.** Verfahren nach Anspruch 1, wobei das induktive Erwärmen derart erfolgt, dass sich eine gehärtete Randschicht von wenigstens 0,2 mm Dicke bis höchstens 8 mm Dicke ausbildet.

**3.** Verfahren nach einem der vorangehenden Ansprüche, wobei das Erwärmen derart erfolgt, dass im gehärteten Randbereich eine Druckeigenspannung von wenigstens 300 MPa gegeben ist.

**4.** Verfahren nach einem der vorangehenden Ansprüche, wobei das Anlassen bei einer Temperatur von 120 - 180 °C, insbesondere bei 130 - 150°C für eine Dauer von 1 - 4 h, insbesondere 2 - 3 h erfolgt.

**5.** Wälzlagerring, hergestellt nach dem Verfahren nach einem der vorangehenden Ansprüche, wobei ein Gefüge unterhalb der gehärteten Randschicht aus Lanzettmartensit besteht.

**Claims**

**1.** A method for producing a rolling bearing ring having an improved robustness against the formation of white etching cracks (WEC), wherein the rolling bearing ring is formed from a sub-eutectoid heat-treated steel, having the following composition (data in %):

| | |
|---|---|
| C: | 0.45 |
| Si: | 0.23 |
| Mn: | 0.64 |
| P: | 0.004 |
| S: | 0.001 |
| Cr: | 1.18 |
| Mo: | 0.28 |
| Ni: | 0.75 |
| Cu: | 0.12 |
| Al: | 0.02 |

and the remainder being iron and trace elements,
and is inductively heated to form a hardened surface layer, then quenched and then tempered, wherein the heating takes place at a frequency of 8-11 kHz, in particular 9-10 kHz, for a period of 3-10 s, in particular 4-7 s.

**2.** The method according to claim 1, wherein the inductive heating occurs such that a hardened surface layer of at least 0.2 mm thickness to at most 8 mm thickness is formed.

**3.** The method according to one of the preceding claims, wherein the heating occurs such that a residual compressive stress of at least 300 MPa is provided in the hardened edge region.

**4.** The method according to any one of the preceding claims, wherein the tempering occurs at a temperature of 120-180°C, in particular 130-150°C for a period of 1-4 h, in particular 2-3 h.

**5.** A rolling bearing ring manufactured using the method according to any one of the preceding claims, wherein a structure underneath the hardened edge layer consists of lath martensite.

**Revendications**

**1.** Procédé de fabrication d'une bague de palier de roulement présentant une robustesse accrue contre la formation de fissures de phase blanche (WEC), dans lequel la bague de palier de roulement est fabriquée à partir d'un acier hypoeutectoïdique de traitement présentant la composition suivante (quantités exprimées en %) :

| | |
|---|---|
| C : | 0,45 |
| Si : | 0,23 |
| Mn : | 0,64 |
| P : | 0,004 |
| S : | 0,001 |
| Cr: | 1,18 |
| Mo : | 0,28 |
| Ni : | 0,75 |
| Cu: | 0,12 |
| Al : | 0,02 |

ainsi qu'un reste du fer et des éléments traces,
et, pour former une couche marginale durcie, chauffée par induction, ensuite trempée et ensuite revenue, dans lequel le chauffage est effectué à une fréquence comprise entre 8 et 11 kHz, en particulier entre 9 et 10 kHz, sur une durée comprise entre 3 et 10 s, en particulier entre 4 et 7 s.

2. Procédé selon la revendication 1, dans lequel le chauffage par induction est effectué de telle sorte qu'une couche marginale durcie d'au moins 0,2 mm d'épaisseur à au plus 8 mm d'épaisseur est formée.

3. Procédé selon l'une quelconque des revendications précédentes, dans lequel le chauffage est effectué de telle sorte que dans la zone marginale durcie est appliquée une contrainte interne de compression d'au moins 300 MPa.

4. Procédé selon l'une quelconque des revendications précédentes, dans lequel le revenu est effectué à une température comprise entre 120 et 180 °C, en particulier entre 130 et 150 °C sur une durée comprise entre 1 et 4 h, en particulier entre 2 et 3 h.

5. Bague de palier de roulement fabriquée selon le procédé selon l'une quelconque des revendications précédentes, dans laquelle une structure sous la couche marginale durcie est constituée de martensite massive.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2123779 A1
- EP 2573195 A1

- WO 2015199599 A1
- JP 2009203526 A